(19) Europäisches Patentamt / European Patent Office / Office européen des brevets

(11) **EP 3 467 933 B1**

(12) **EUROPEAN PATENT SPECIFICATION**

(45) Date of publication and mention
of the grant of the patent:
**19.03.2025 Bulletin 2025/12**

(21) Application number: **18152564.3**

(22) Date of filing: **19.01.2018**

(51) International Patent Classification (IPC):
**H01M 10/44** (2006.01)    **H01M 10/052** (2010.01)

(52) Cooperative Patent Classification (CPC):
**H01M 10/44; H01M 10/052; Y02E 60/10**

(54) **LITHIUM-ION BATTERY CHARGING METHOD FOR CORRECTING AND COMPENSATING VOLTAGE**

LADEVERFAHREN EINER LITHIUM-IONEN-BATTERIE ZUR KORREKTUR UND KOMPENSATION VON SPANNUNG

PROCÉDÉ DE CHARGE DE BATTERIE AU LITHIUM-ION ET DE CORRECTION ET DE COMPENSATION DE TENSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.10.2017 US 201715723216**
**07.12.2017 PCT/CN2017/114911**

(43) Date of publication of application:
**10.04.2019 Bulletin 2019/15**

(73) Proprietor: **Guangzhou Fullriver Battery New Technology Co., Ltd.**
**Guangzhou, Guangdong 511475 (CN)**

(72) Inventors:
• **TANG, Shengcheng**
  **Guangzhou, Guangdong 511475 (CN)**
• **ZENG, Shihua**
  **Guangzhou City, Guangdong 511475 (CN)**
• **LI, Li**
  **Guangzhou City, Guangdong 511475 (CN)**
• **YI, Shiming**
  **Guangzhou City, Guangdong 511475 (CN)**

(74) Representative: **Cabinet Chaillot**
**16/20, avenue de l'Agent Sarre**
**B.P. 74**
**92703 Colombes Cedex (FR)**

(56) References cited:
WO-A1-2017/113994    US-A1- 2011 156 660
US-A1- 2018 048 031

## Description

FIELD OF THE INVENTION

The present invention relates to technical field of battery charging method, and more particularly to charging method of lithium-ion battery and polymer lithium-ion battery.

BACKGROUND OF THE INVENTION

Chinese Patent CN101388477B discloses a rapid charging method which increases the limited charge voltage to compensate the internal voltage drop of the battery. During the charging of lithium-ion battery and polymer lithium-ion battery, stop charging the battery when it is charged to the limited charge voltage; the limited charge voltage between the two poles of the battery is set as $U=2U_0-U_S$, wherein $U_S$ is the stabilized voltage dropped from $U_0$ which the battery is charged to by constant-current charging; wherein $U_0$ is charge cut-off voltage and commonly recognized by the industry as the charge cut-off voltage used by the low power constant-current and constant-voltage charging method; The stabilized voltage $U_S$ is selected by conducting timing when stopping constant-current charging the battery and starting to lay up the battery; from some time interval, when the open-circuit voltage drop of the battery over a certain time interval is smaller than a certain value, the battery voltage would reach a steady state; the voltage at the first time point is selected as the stabilized voltage $U_S$ of the battery.

When the method is applied in lithium iron phosphate battery, $U_0$ is charge cut-off voltage of 3.6V which is commonly recognized by the industry as the charge cut-off voltage used in the low power constant-current and constant-voltage charging method; the battery is charged to $U=2U_0-U_S$, which is not charged to saturation, but only reaches 88% of the saturation point, thus failing to make the most of the battery. Also 3.5V, 3.65V and 3.7V are commonly recognized by the industry as the charge cut-off voltage used by the low power constant-current and constant-voltage charging method, however the battery is charged to $U=2U_0-U_S$ which is not charged to saturation, therefore, they all may not make the most of the battery efficiency.

When the method is applied in Lithium cobalt battery, $U_0$ is charge cut-off voltage of 4.2V which is commonly recognized by the industry as the charge cut-off voltage used by the low power constant-current and constant-voltage charging method; the battery is charged to $U=2U_0-U_S$ and is not charged to saturation, but only reaches 97% of the saturation point, which may not make the most of the battery.

In order to make the most of the battery efficiency, it is necessary to make appropriate corrections to the limited charge voltage. Prior art in this technical field is disclosed in documents WO 2017113994 A1 and US 2011156660 A1.

## SUMMARY OF THE INVENTION

The present invention provides a lithium-ion battery charging method for correcting and compensating voltage so as to make the most of the battery efficiency.

Definition

Ideal Battery Charging: Charge the lithium-ion battery by constant-current & constant-voltage charging method, break the open-circuit, then stabilized voltage reaches constant-voltage charging voltage. Theoretically charging the lithium-ion battery by constant- current and constant-voltage charging method, when the lithium-ion battery is charged to infinitesimal current, its open-circuit stabilized voltage may reach constant-voltage charging voltage after the charging circuit is broken. While practically charging the lithium-ion battery by constant- current and constant-voltage charging method, when the lithium-ion battery is charged to self-discharge current, the charging current and self-discharge current of the lithium-ion battery would be in a dynamic equilibrium state; when the charging circuit is broken, the open-circuit stabilized voltage of the lithium-ion battery may be approximate to the value of constant-voltage charging voltage. Standard stabilized voltage: constant-current charge the lithium-ion battery with the current regulated by the Industry Standard or stipulated by the suppliers to $U_0$ and then constant-voltage charge the lithium-ion battery to the cut-off current regulated by the Industry Standard or stipulated by the suppliers, then stop charging the lithium-ion battery. Start timing when stopping constant-current and constant-voltage charging the lithium-ion battery and starting to lay up the battery, from some time interval, the open-circuit voltage-drop of the lithium-ion battery would be smaller than some certain value during some certain time interval, which means the battery voltage has already been in a stable state, then select the voltage corresponding to the first time point of the time interval as stabilized voltage $U_{SO}$ of the battery.

Freedom degree of lithium-ion means the degree of lithium-ion's free activities among the positive electrode. During the charging process of the lithium-ion battery, the lithium-ion would de-intercalate from the cathode and intercalate into the anode through electrolyte. The lithium-ion is freely distributed in the lattice of the positive electrode and would find the niche place that most fits for itself. During the de-intercalation process, the lithium-ion with closer-range and of larger freedom degree would be more easily to de-intercalate from the cathode, and the lithium-ion with longer-range and of smaller freedom degree would be less easily to de-intercalate from the cathode. The lithium-ion strictly bond to the cathode has smaller freedom degree and more difficult to de-intercalate from the cathode, or only de-intercalate from the cathode with more charge energy.

Principle

The charging method disclosed by CN101388477B would stop charging when the lithium-ion battery is charged to $U=2U_0-U_S=U_0+(U_0-U_S)$, which compensates the internal voltage drop $(U_0-U_S)$ of the battery, said voltage drop $(U_0-U_S)$ is caused by constant-current I charging to $U_0$ and being laid up; However, it only compensates the ohmic voltage drop, the concentration polarization voltage drop, electrochemical polarization voltage drop and other impedance voltage drop, without considering that the lithium-ion battery doesn't reach saturation when it is charged to $U_0$ with constant-current I and the de-intercalation of some lithium-ion of smaller freedom degree, thus the voltage drop compensated fails to charge the battery to 100% saturation, which is not an ideal charging state. Also the charging method disclosed by CN101388477B fails to address the effects of equipment error and measuring error. The 100% saturation means that constant-current charge the lithium-ion battery with the current regulated by the Industry Standard or stipulated by the suppliers to $U_0$ and then constant-voltage charging the lithium-ion battery to the cut-off current regulated by the Industry Standard or stipulated by the suppliers, then stop charging the lithium-ion battery; constant -current discharge the lithium-ion battery with the current regulated by the Industry Standard or stipulated by the suppliers to discharge cut-off voltage regulated by the Industry Standard or stipulated by the suppliers, the discharge capacity would be 100%, thus the charging state of the battery before discharging would be 100% saturation. The present invention adds $(U_0-U_{SO})$ to $U=2U_0-U_S=U_0+(U_0-U_S)$, charging the battery to $U=U_0+(U_0-U_S)+(U_0-U_{SO})=3U_0-U_S-U_{SO}$, and takes the de-intercalation of some lithium-ion of smaller freedom degree into consideration, thus making charging the battery approximate to 100% saturation, reducing the effects of equipment errors and measuring errors, which is much more close to ideal charging state.

The technical solution disclosed by the present invention eliminates the above-mentioned defects as follows: Charge the battery to saturation by standard constant-current and constant-voltage charging method and then lie up the battery in an open-circuit, it is found that the standard stabilized voltage of the lithium iron phosphate battery is greatly different from its standard charge cut-off voltage, while the standard stabilized voltage of the lithium cobalt battery is little different from its standard charge cut-off voltage, which directly correlates to the low charging saturation of lithium iron phosphate battery and high charging saturation of lithium cobalt battery.

To make the most of the battery efficiency and charge the battery to saturation, it is necessary to add modified value $(U_0-U_{SO})$ to the original value $U=U_0+(U_0-U_S)$, the voltage value for correcting and compensating is as follows:

$$U = U_0 + (U_0 - U_S) + (U_0 - U_{SO}) = 3U_0 - U_S - U_{SO}$$

Charge the lithium iron phosphate battery and lithium cobalt battery based on the voltage value, the battery may be charged more close to 100% saturation by correcting and compensating voltage.

It is tested and verified on ternary$(LiNi_xMn_yCo_zO_2)$ lithium-ion battery, lithium manganate $(LiMn_2O_4)$ battery and lithium titanate $(Li_4Ti_5O_{12})$ battery in the same way and achieves the same effect.

Lithium-ion battery charging method for correcting and compensating voltage, during the charging process, start to constant-voltage charge the battery when it is charged to the voltage limited charge voltage U, keep on constant-voltage charging until the charging current decreases to 5%~99.99% of the charging current before constant-voltage charging, and then stop charging the battery, wherein the limited charge voltage between the battery positive and negative electrodes is set as $3U_0-U_S-U_{SO}$.

Lithium-ion battery charging method for correcting and compensating voltage, during the charging process, start to constant-voltage charge the battery when it is charged to the voltage limited charge voltage U, keep on constant-voltage charging until the charging current decreases to 50%~99.99% of the charging current before constant-voltage charging, and then stop charging the battery, wherein the limited charge voltage between the battery positive and negative electrodes is set as $3U_0-U_S-U_{SO}$.

$U_{SO}$ is the standard stabilized voltage dropped from $U_0$ which the battery is charged to by constant-current and constant-voltage charging, whose value is selected by the following steps: when stopping constant-current and constant-voltage charging the lithium-ion battery and starting to lay up the lithium-ion battery, start timing; from some time interval $T_{Uso}$, the open-circuit voltage-drop of the lithium-ion battery would be smaller than some certain value during some certain time interval $T_{Uso}$, which means the battery voltage has already been in a stable state, then select the voltage corresponding to the first time point of the time interval $T_{Uso}$ as stabilized voltage $U_{SO}$ of the battery.

$U_S$ is the stabilized voltage dropped from $U_0$ which the battery is charged to by constant-current charging.

$U_0$ is stabilized charge cut-off voltage.

Specifically, constant-current charge the lithium-ion battery with the current regulated by the Industry Standard or stipulated by the suppliers to $U_0$ and then constant-voltage charge the lithium-ion battery to the cut-off current regulated by the Industry Standard or stipulated by the suppliers, then stop charging the lithium-ion battery; when stopping constant-current and constant-voltage charging the lithium-ion battery and starting to lay up the lithium-ion battery, start timing , from some time interval $T_{Uso}$, the open-circuit voltage-drop of the lithium-ion battery would be smaller than some certain value during some certain time interval $T_{Uso}$, which means the battery voltage has already been in a stable state, then select the voltage corresponding to the first time point of the time interval $T_{Uso}$ as standard stabilized voltage $U_{SO}$ of the battery

$U_S$ is the stabilized voltage dropped from $U_0$ which the battery is charged to by constant-current charging, whose value is selected by the following steps: start timing when stopping constant-current and constant-voltage charging and starting to lay up the lithium-ion battery, from some time interval $T_{Us}$, the open-circuit voltage-drop of the lithium-ion battery would be smaller than some certain value during some certain time interval $T_{Us}$, which means the battery voltage has already been in a stable state, then select the voltage corresponding to the first time point of the time interval $T_{Us}$ as stabilized voltage $U_S$ of the battery.

wherein $U_0$ is standard charge cut-off voltage which is commonly recognized by the industry as the charge cut-off voltage used by the low power constant-current and constant-voltage charging method.

As an improved technical solution, the present invention provides a lithium-ion battery charging method for correcting and compensating voltage, wherein the battery may be charged to $U=3U_0-U_S-U_{SO}$ by constant-current charging method, and then stop charging.

As an improved technical solution, the present invention provides a lithium-ion battery charging method for correcting and compensating voltage, wherein the battery may be charged to $U=3U_0-U_S-U_{SO}$ by multi-section constant-current charging method and then stops charging, $U_S$ is determined by measuring the current of the end-section before stopping charging.

As an improved technical solution, the present invention provides a lithium-ion battery charging method for correcting and compensating voltage, start to constant-voltage charge the battery when it is charged to $U=3U_0-U_S-U_{SO}$ by multi-section constant-current charging method, keep on constant-voltage charging until the charging current decreases to 5%~99.99% of the charging current before constant-voltage charging, and then stop charging the battery; $U_S$ is determined by measuring the current of the end-section before stopping charging.

As an improved technical solution, the present invention provides a lithium-ion battery charging method for correcting and compensating voltage, start to constant-voltage charge the battery when it is charged to $U=3U_0-U_S-U_{SO}$ by multi-section constant-current charging method, keep on constant-voltage charging until the charging current decreases to 50%~99.99% of the charging current before constant-voltage charging, and then stop charging the battery; $U_S$ is determined by measuring the current of the end-section before stopping charging.

As a measurement method for $U_{SO}$, the present invention provides a lithium-ion battery charging method for correcting and compensating voltage, when stopping constant-current and constant-voltage charging the lithium-ion battery and starting to lay up the lithium-ion battery, start timing ; select every 5 minutes as a time interval; from some time interval $T_5$, the open-circuit voltage-drop of the lithium-ion battery would be smaller than 2 mV during 5 minutes time interval $T_5$, which means the battery voltage has already been in a stable state, then select the voltage corresponding to the first time point of said 5 minutes time interval $T_5$ as standard stabilized voltage $U_{SO}$ of the battery.

As a measurement method for $U_{SO}$, the present invention provides a lithium-ion battery charging method for correcting and compensating voltage, when stopping constant-current and constant-voltage charging the lithium-ion battery and starting to lay up the lithium-ion battery, start timing; select every 10 minutes as a time interval; from some time interval $T_{10}$, the open-circuit voltage-drop of the lithium-ion battery would be smaller than 1 mV during 10 minutes time interval $T_{10}$, which means the battery voltage has already been in a stable state, then select the voltage corresponding to the first time point of said 10 minutes time interval $T_{10}$ as standard stabilized voltage $U_{SO}$ of the battery.

As a measurement method for $U_S$, the value of $U_S$ is selected by the following steps: start timing when stopping constant-current and constant-voltage charging and starting to lay up the lithium-ion battery, from some time interval $T_{Us'}$, the open-circuit voltage-drop of the lithium-ion battery would be smaller than some certain value during some certain time interval $T_{Us'}$, which means the battery voltage has already been in a stable state, then select the voltage corresponding to the first time point of the time interval $T_{Us'}$ as stabilized voltage $U_S$ of the battery.

Wherein $U_0$ is standard charge cut-off voltage which is commonly recognized by the industry as the charge cut-off voltage used by the low power constant-current and constant-voltage charging method.

When the battery is lithium cobalt battery and $U_0$ is selected as 4.2V, $U_0 \approx U_{SO}$, stop charging when it is charged to $U \approx U_0 + (U_0 - U_S)$.

It should be clarified that the standard stabilized voltage $U_{SO}$ correlates to standard charge cut-off voltage $U_0$ and standard charge cut-off current, and is not that relevant to the charging rate, or even has nothing to do with the charging rate.

It is well-known that for lithium iron phosphate battery, the standard charge cut-off voltage $U_0$ may be 3.5V, 3.6V, 3.65V or 3.7V. Different value of $U_0$ would attain different value of standard capacity $C_0$. The definition of $C_0$: constant-current charge the lithium-ion battery with the current regulated by the Industry Standard or stipulated by the suppliers to $U_0$ and then constant-voltage charge the lithium-ion battery to the cut-off current regulated by the Industry Standard or stipulated by the suppliers; and then discharge the lithium-ion battery with the current regulated by the Industry Standard or stipulated by the suppliers to discharge cut-off voltage regulated by the Industry Standard or stipulated by the suppliers, the discharge capacity would be standard capacity $C_0$. The standard charge cut-off voltage $U_0$ for lithium iron phosphate battery may selected from any the known voltage values (3.5V, 3.6V, 3.65V or 3.7V), the charging method for correcting and compensating voltage of the present invention $U=U_0+(U_0-U_S)+(U_0-U_{SO})=3U_0-U_S-U_{SO}$ can be applied to all when charging the battery with capacity close to the value of standard capacity $C_0$ during rapid charging.

It is well-known that for lithium cobalt battery, the standard charge cut-off voltage that most commonly and regularly used would be 4.2V. Now it has been developed lithium cobalt battery with high voltage of 4.3V and 4.35V, and now it is developing lithium cobalt battery with high voltage of 4.4V and 4.5V, which means the standard charge cut-off voltage $U_0$ is 4.3V, 4.35V, 4.4V and 4.5V. Different value of $U_0$ would attain different value of standard capacity $C_0$. The standard charge cut-off voltage $U_0$ for lithium cobalt battery of different voltage may be selected from any the known voltage values (4.3V, 4.35V, 4.4V or 4.5V), the charging method for correcting and compensating voltage of the present invention $U=U_0+(U_0-U_S)+(U_0-U_{SO})=3U_0-U_S-U_{SO}$ can be applied to all when charging the battery with capacity close to the value of standard capacity $C_0$ during rapid charging.

It is well-known that for ternary lithium battery, the standard charge cut-off voltage that most commonly and regularly used would be 4.2V. Now it has been developed ternary lithium battery of high voltage 4.3V and 4.35V, which means the standard charge cut-off voltage $U_0$ is 4.3V and 4.35V. Different value of $U_0$ would attain different value of standard capacity $C_0$. The standard charge cut-off voltage $U_0$ for ternary lithium battery of different voltage may selected from any the known voltage values (4.3V or 4.35V), the charging method for correcting and compensating voltage of the present invention $U=U_0+(U_0-U_S)+(U_0-U_{SO})=3U_0-U_S-U_{SO}$ can be applied to all when charging the battery with capacity close to the value of standard capacity $C_0$ during rapid charging.

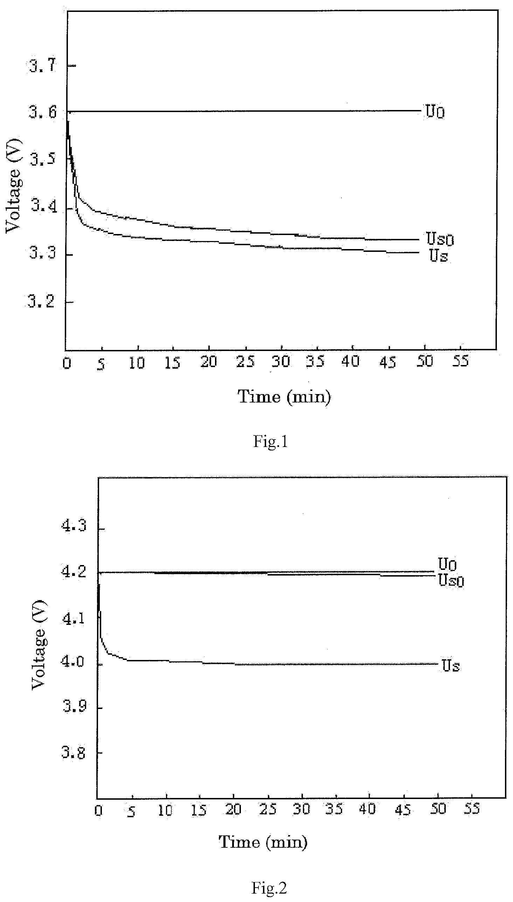

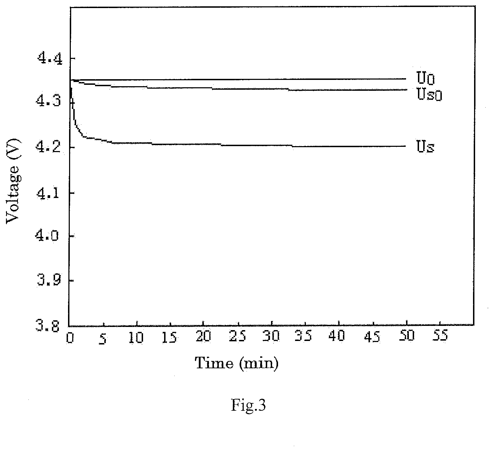

Special cases: when standard charge cut-off voltage $U_0$ for lithium cobalt battery is selected as 4.2V (as shown in Fig.2), $U_0 \approx U_{SO}$, stop charging the battery when it is charged to $U \approx U_0+(U_0-U_S)$, and attain almost the same effects as the battery charged to 4.2V by constant-current and constant-voltage charging method, that is to say, as to when standard charge cut-off voltage $U_0$ for lithium cobalt battery is selected as 4.2V, the corrected value $(U_0-U_S)$ may be negligible. However, when standard charge cut-off voltage $U_0$ for lithium cobalt battery is selected as other values, such as $U_0=4.35V$ shown in Fig.3, the value of $U_0$ is greatly different from that of $U_{SO}$, it should take the corrected value $(U_0-U_{SO})$ into account so as to make the battery charged to 100% saturation.

Compared to the existing charging method, the present invention has the following beneficial effects:

1. the lithium-ion battery may be rapidly charged and with the capacity that approximates to saturation;

2. the charging method disclosed by the present invention may be applied to charge all kinds of lithium-ion batteries, and charge the battery approximate to 100% saturation so as to make the most of the battery efficiency;

3.the lithium-ion battery charged by the charging method of the present invention, and discharge the battery with a regular or a user method, will have better cycle life than the battery charged by constant-current and constant-voltage charging method of the same charging rate; or with the same cycle frequency, the battery charged with the charging method of the present invention would have larger discharge capacity;

4.the method disclosed by the present invention may be designed as charging circuit and be made into battery charger;

5. the method disclosed by the present invention may be made into electronic parts and components and used when assembled with cells;

6. the method disclosed by the present invention may charge battery by constant-current and constant-voltage charging method, which is much more in line with charging habits of the battery users and the selection of charging integrated circuit (IC);

7. the method disclosed by the present invention may charge battery some certain value by constant-voltage charging method and then stop charging the battery, which is much more easily to be implemented.


BRIEF DESCRIPTION OF THE DRAWINGS

The present invention will become more readily apparent to those ordinarily skilled in the art after reviewing the following detailed description and accompanying drawings, in which:

FIG. 1 is the curve of standard stabilized voltage $U_{SO}$ of lithium iron phosphate battery when it was constant-current and constant-voltage charged to $U_0$ and the curve of stabilized voltage $U_S$ when it was constant-current and constant-

voltage charged to $U_0$.

FIG. 2 is the curve of standard stabilized voltage $U_{SO}$ of lithium cobalt battery when it was constant-current and constant-voltage charged to $U_0$ and the curve of stabilized voltage $U_S$ when it was constant-current and constant-voltage charged to $U_0$.

FIG. 3 is the curve of standard stabilized voltage $U_{SO}$ of lithium cobalt battery of 4.35V when it was constant-current and constant-voltage charged to $U_0$ and the curve of stabilized voltage $U_S$ when it was constant-current and constant-voltage charged to $U_0$.

## DETAILED DESCRIPTION OF PREFERRED EMBODIMENTS

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

Comparing example 1-1: lithium iron phosphate battery standard charging method

402045Fe15C is lithium iron phosphate battery of high charging rate and with power parameters of 3.2V190mAh, which belongs to the LiFePO4/C battery system single cell ($U_0$=3.6V), with nominal capacity Cr=190mAh. According to GBT18287-2013 standard charging method:

1. constant-current charge the battery with 38mA current (0.2C) to 3.6V, and then constant-voltage charge the lithium-ion battery with 3.6V until the current decreases to 3.8mA (0.02C), and then stop charging and record the charging time $T_C$ and charge capacity $C_C$;
2. constant-current discharge the battery with 38mA current (0.2C) to 2V, and then record the discharge capacity $C_d$;(this step may evaluate the discharge capacity after charging, so it is not a necessary step for the charging method)
3. cycling procedures:

3.1 constant-current charge the battery with 1140 mA current to 3.6V, and then constant-voltage charge the lithium-ion battery with 3.6V until the current decreases to 3.8mA;
3.2 lay up the battery for 5 minutes;
3.3 constant-current discharge the battery with 1140 mA current to 2V;
3.4 lay up the battery for 5 minutes;
3.5 keep cycling between the step 3.1 to step 3.4 for 1000 times;
3.6 end.

Comparing example 1-2: lithium iron phosphate battery charging method of CN101388477B

The same lithium iron phosphate battery as comparing example 1-1 (402045Fe15C), it is expected to charge the battery to saturation within 10 minutes. According to the rapid charging method disclosed by CN101388477B, the current used for constant-current and constant-voltage charging I=$C_r$/t*60=190/10*60=1140mA (6C charging rate).

1. measure the stabilized voltage: constant-current charge the battery with 1140mA current to 3.6V, then stop charging and measure the voltage of the open circuit and obtain the stabilized voltage $U_S$, the curve of stabilized voltage $U_S$ is shown in Fig.1; when stopping constant-current and constant-voltage charging the lithium-ion battery and starting to lay up the lithium-ion battery, start timing; select every 10 minutes as a time interval; from some time interval, the open-circuit voltage-drop of the lithium-ion battery would be smaller than 1 mV during 10 minutes time interval, which means the battery voltage has already been in a stable state, then select the voltage corresponding to the first time point of said 10 minutes as stabilized voltage $U_S$ of the battery;
2. constant-current discharge the battery with 38mA current (0.2C) to 2V (this step discharge the capacity charged by step 1, making the battery in a awaiting charged state so it is not a necessary step for the charging method);
3. constant-current charge the lithium-ion battery with 1140mA to $2U_0$-$U_S$, and then stop charging, record the charging time $T_C$ and charge capacity $C_C$;
4. constant-current discharge the battery with 38mA current (0.2C) to 2V, and then record the discharge capacity $C_d$;(this step may evaluate the discharge capacity after charging, so it is not a necessary step for the charging method)
5. cycling procedures:

5.1 constant-current charge the lithium-ion battery with 1140mA to $2U_0$-$U_S$;
5.2 lay up the battery for 5 minutes;

5.3 constant-current discharge the battery with 1140 mA current to 2.0V;

5.4 lay up the battery for 5 minutes;

5.5 keep cycling between the step 5.1 to step 5.4 for 1000 times;

5.6 end.

Embodiment 1: lithium-iron phosphate battery the method of the present invention

The same lithium-iron phosphate battery as the comparing example 1-1 (402045Fe15C), and the same stabilized voltage $U_S$ measured in the comparing example 1-2;

1. measure the standard stabilized voltage: constant-current charge the battery with 38mA (0.2C) current to 3.6V, then current-voltage charge the battery with 3.6V voltage until the current decreases to 3.8mA (0.02C), stop charging; measure the voltage of the open circuit and obtain the standard stabilized voltage $U_{SO}$, the curve of stabilized voltage $U_{SO}$ is shown in Fig.1; when stopping constant-current and constant-voltage charging the lithium-ion battery and starting to lay up the lithium-ion battery, start timing; select every 10 minutes as a time interval; from some time interval, the open-circuit voltage-drop of the lithium-ion battery would be smaller than 1 mV during 10 minutes time interval, which means the battery voltage has already been in a stable state, then select the voltage corresponding to the first time point of said 10 minutes as standard stabilized voltage $U_{SO}$ of the battery;

2. constant-current discharge the battery with 38mA current (0.2C) to 2.0V (this step discharges the capacity charged by step 1, making the battery in a awaiting charged state so it is not a necessary step for the charging method);

3. it is expected to charge the battery to saturation within 10 minutes. According to the lithium-ion battery charging method for correcting and compensating voltage disclosed by the present invention, the current used for constant-current charging would be 1140mA (6C charging rate); when the battery is charged to $U=3U_0-U_S-U_{SO}$, start to constant-voltage charge the battery, keep on constant-voltage charging until the charging current decreases to 95% of the charging current before constant-voltage charging, and then stop charging the battery; record the charging time $T_C$ and charge capacity $C_C$.

4. constant-current discharge the battery with 38mA current (0.2C) to 2V, and then record the discharge capacity $C_d$;(this step may evaluate the discharge capacity after charging, so it is not a necessary step for the charging method)

5. cycling procedures:

5.1 constant-current charge the lithium-ion battery with 1140mA to $3U_0-U_S-U_{SO}$, then start to constant-voltage charge the battery, until the charging method decreases to 1083mA (95% of the charging current before constant-voltage charging), and then stop charging the battery;

5.2 lay up the battery for 5 minutes;

5.3 constant-current discharge the battery with 1140 mA current to 2.0V;

5.4 lay up the battery for 5 minutes;

5.5 keep cycling between the step 5.1 to step 5.4 for 1000 times;

5.6 end.

The experimental results of comparing example 1-1, comparing example 1-2 and embodiment 1 are listed in table 1:

Table 1

|  | Comparing example 1-1 | Comparing example 1-2 | Embodiment 2 |
|---|---|---|---|
| Uo(V) | 3.6 | 3.6 | 3.6 |
| Us(V) | - | 3.312 | 3.312 |
| Uso(V) | - | - | 3.340 |
| Charging current(mA) | 38 | 1140 | 1140 |
| Charge cut-off current(mA) | 3.8 | 1140 | 1083 |
| Limited charge voltage(V) | 3.6 | 3.888 | 4.148 |
| Charging time Tc (min) | 338 | 9.2 | 10.6 |
| Charge Capacity Cc (mAh) | 198 | 175 | 200 |
| Discharge Capacity Cd (mAh) | 197 | 174 | 199 |

(continued)

|  | Comparing example 1-1 | Comparing example 1-2 | Embodiment 2 |
|---|---|---|---|
| Saturation level of charging | 100% | 88.3% | 101.0% |
| Capacity retention ratio after cycling for 1000 times | 85.2% | 88.4% | 88.2% |

The saturation level of charging: charge the battery by standard charging method and discharge the battery by standard discharge method, the discharge capacity is 100%; charge the battery by non-standard charging method and discharge the battery by standard discharge method, the percentage of discharge capacity of non-standard charging method to that of standard charging method is the saturation level of charging.

Comparing example 2-1: lithium cobalt battery standard charging method

703048H10C is polymer lithium-ion battery of high charging rate and with power parameters of 3.7V800mAh, which belongs to the $LiCoO_2$/C battery system single cell ($U_0$=4.2V), with nominal capacity Cr=800mAh. According to GBT18287-2013 standard charging method:

1. constant-current charge the battery with 160mA current (0.2C) to 4.2V, and then constant-voltage charge the lithium-ion battery with 4.2V until the current decreases to 16mA (0.02C), then stop charging and the charging time $T_C$ and charge capacity $C_C$;
2. constant-current discharge the battery with 160mA current (0.2C) to 3.0V, and then record the discharge capacity $C_d$; (this step may evaluate the discharge capacity after charging, so it is not a necessary step for the charging method)
3. cycling procedures:

    3.1 constant-current charge the battery with 4800 mA current to 4.2V, and then constant-voltage charge the lithium-ion battery with 4.2V until the current decreases to 16mA;
    3.2 lay up the battery for 5 minutes;
    3.3 constant-current discharge the battery with 4800 mA current to 3V;
    3.4 lay up the battery for 5 minutes;
    3.5 keep cycling between the step 3.1 to step 3.4 for 500 times;
    3.6 end.

Comparing example 2-2: lithium cobalt battery charging method of CN101388477B

The same polymer lithium-ion battery as comparing example 2-1 (703048H10C), it is expected to charge the battery to saturation within 10 minutes. According to the rapid charging method disclosed by CN101388477B, the current used for constant-current and constant-voltage charging I=$C_r$/t*60=800/10*60=4800mA (6C charging rate).

1. measure the standard stabilized voltage: constant-current charge the battery with 4800mA current to 4.2V, stop charging and measure the voltage of the open circuit and obtain the standard stabilized voltage $U_{SO}$, the curve of stabilized voltage $U_{SO}$ is shown in Fig.2; when stopping constant-current and constant-voltage charging the lithium-ion battery and starting to lay up the lithium-ion battery, start timing; select every 10 minutes as a time interval; from some time interval, the open-circuit voltage-drop of the lithium-ion battery would be smaller than 1 mV during 10 minutes time interval, which means the battery voltage has already been in a stable state, then select the voltage corresponding to the first time point of said 10 minutes as stabilized voltage $U_S$ of the battery;
2. constant-current discharge the battery with 160mA current (0.2C) to 3.0V (this step discharge the capacity charged by step 1,making the battery in an awaiting charged state so it is not a necessary step for the charging method);
3. constant-current charge the lithium-ion battery with 4800mA to $2U_0$-$U_S$, then stop charging and record the charging time $T_C$ and charge capacity $C_C$;
4. constant-current discharge the battery with 160mA current (0.2C) to 3V, and then record the discharge capacity $C_d$.(this step may evaluate the discharge capacity after charging, so it is not a necessary step for the charging method)
5. cycling procedures:

    5.1 constant-current charge the lithium-ion battery with 4800mA to $2U_0$-$U_S$;
    5.2 lay up the battery for 5 minutes;
    5.3 constant-current discharge the battery with 4800 mA current to 3V;

5.4 lay up the battery for 5 minutes;
5.5 keep cycling between the step 5.1 to step 5.4 for 500 times;
5.6 end.

Embodiment 2: lithium cobalt battery charging method disclosed by the present invention.

The same polymer lithium-ion battery as comparing example 2-1 (703048H10C), and the same stabilized voltage $U_S$ measured in comparing example2-2.

1. measure the standard stabilized voltage: constant-current charge the battery with 160mA(0.2C) current to 4.2V, then start to constant-voltage charge the battery with voltage of 4.2V, until the charging current decreases to 16mA(0.02C), stop charging the battery; measure the voltage of the open circuit and obtain the standard stabilized voltage $U_{SO}$, the curve of standard stabilized voltage $U_{SO}$ is shown in Fig.2; when stopping constant-current and constant-voltage charging the lithium-ion battery and starting to lay up the lithium-ion battery, start timing; select every 10 minutes as a time interval; from some time interval, the open-circuit voltage-drop of the lithium-ion battery would be smaller than 1 mV during 10 minutes time interval, which means the battery voltage has already been in a stable state, then select the voltage corresponding to the first time point of said 10 minutes as standard stabilized voltage $U_{SO}$ of the battery;

2. constant-current discharge the battery with 160mA current (0.2C) to 3.0V; (this step discharge the capacity charged by step 1, making the battery in an awaiting charged state so it is not a necessary step for the charging method)

3. it is expected to charge the battery to saturation within 10 minutes; According to the lithium-ion battery charging method for correcting and compensating voltage disclosed by the present invention, the current used for constant-current charging would be 4800mA (6C charging rate); when the battery is charged to $U=3U_0-U_S-U_{SO}$, start to constant-voltage charge the battery until the charging current decreases to 95% of the current before constant-voltage charging; record the charging time $T_C$ and charge capacity $C_C$;

4. constant-current discharge the battery with 160mA current (0.2C) to 3.0V, and then record the discharge capacity $C_d$; (this step may evaluate the discharge capacity after charging, so it is not a necessary step for the charging method)

5. cycling procedures:

5.1 constant-current charge the battery with 4800mA to $3U_0-U_S-U_{SO}$, then start to constant-charge the battery until the charging current decreases to 4560mA (95% of the current before constant-voltage charging);
5.2 lay up the battery for 5 minutes;
5.3 constant-current discharge the battery with 4800 mA current to 3.0V;
5.4 lay up the battery for 5 minutes;
5.5 keep cycling between the step 5.1 to step 5.4 for 500 times;
5.6 end.

The experimental results of comparing example 2-1, comparing example 2-2 and embodiment 2 are listed in table 2:

Table 2

|  | Comparing example 3-1 | Comparing example3-2 | Embodiment 4 |
|---|---|---|---|
| $U_O$ (V) | 4.2 | 4.2 | 4.2 |
| $U_S$ (V) | - | 4.016 | 4.016 |
| Uso (V) | - | - | 4.196 |
| Charging current (mA) | 160 | 4800 | 4800 |
| Charge cut-off current (mA) | 16 | 4800 | 4560 |
| Limited charge voltage (V) | 4.2 | 4.384 | 4.388 |
| Charging time Tc (min) | 344 | 10.0 | 10.4 |
| Charge capacity Cc (mAh) | 826 | 802 | 830 |
| Discharge capacity Cd (mAh) | 825 | 801 | 828 |
| Saturation level of charging | 100% | 97.1% | 100.5% |

(continued)

|  | Comparing example 3-1 | Comparing example3-2 | Embodiment 4 |
|---|---|---|---|
| Capacity retention ratio after cycling for 500 times | 81.3% | 85.2% | 85.1% |

Comparing example 3-1: lithium cobalt battery of high-voltage 4.35V standard charging method

60120HV10C is polymer lithium-ion battery of high voltage 4.35V and with power parameters of 235mAh, which belongs to the $LiCoO_2/C$ battery system single cell ($U_0$=4.35V), with nominal capacity Cr=235mAh. According to GBT18287-2013 standard charging method:

1. constant-current charge the battery with 47mA current (0.2C) to 4.35V, and then constant-voltage charge the lithium-ion battery with 4.35V until the current decreases to 4.7mA (0.02C), then stop charging and record the charging time $T_C$ and charge capacity $C_C$;
2. constant-current discharge the battery with 47mA current (0.2C) to 3V, and then record the discharge capacity $C_d$. (this step may evaluate the discharge capacity after charging, so it is not a necessary step for the charging method)
3. cycling procedures:

3.1 constant-current charge the battery with 470 mA current to 4.35V, and then constant-voltage charge the lithium-ion battery with 4.35V until the current decreases to 4.7mA;
3.2 lay up the battery for 5 minutes;
3.3 constant-current discharge the battery with 470 mA current to 3V;
3.4 lay up the battery for 5 minutes;
3.5 keep cycling between the step 3.1 to step 3.4 for 500 times;
3.6 end.

Comparing example 3-2: lithium cobalt battery of high-voltage 4.35V charging method of CN101388477B

The same polymer lithium-ion battery as comparing example 5-1 (60120HV10C), it is expected to charge the battery to saturation within 30 minutes. According to the rapid charging method disclosed by CN101388477B, the current used for constant-current and constant-voltage charging I=$C_r$/t*60=235/30*60=470mA (2C charging rate).

1. measure the stabilized voltage: constant-current charge the battery with 470mA current to 4.35V, stops charging and measure the voltage of the open circuit and obtain the stabilized voltage $U_S$, the curve of stabilized voltage $U_S$ is shown in Fig.3; when stopping constant-current and constant-voltage charging the lithium-ion battery and starting to lay up the lithium-ion battery, start timing; select every 5 minutes as a time interval; from some time interval, the open-circuit voltage-drop of the lithium-ion battery would be smaller than 2 mV during 5 minutes time interval, which means the battery voltage has already been in a stable state, then select the voltage corresponding to the first time point of said 5 minutes as stabilized voltage of the battery $U_S$;
2. constant-current discharge the battery with 47mA current (0.2C) to 3V (this step discharge the capacity charged by step 1, making the battery in an awaiting charged state so it is not a necessary step for the charging method);
3. constant-current charge the lithium-ion battery with 470mA to $2U_0$-$U_S$, then stop charging and record the charging time $T_C$ and charge capacity $C_C$;
4. constant-current discharge the battery with 47mA current (0.2C) to 3V, and then record the discharge capacity $C_d$.(this step may evaluate the discharge capacity after charging, so it is not a necessary step for the charging method)
5. cycling procedures:

5.1 constant-current charge the lithium-ion battery with 470mA to $2U_0$-$U_S$;
5.2 lay up the battery for 5 minutes;
5.3 constant-current discharge the battery with 470 mA current to 3V;
5.4 lay up the battery for 5 minutes;
5.5 keep cycling between the step 5.1 to step 5.4 for 500 times;
5.6 end.

Embodiment 3: Lithium cobalt battery of high-voltage 4.35V charging method disclosed by the present invention

The same polymer lithium-ion battery as comparing example 3-1 (60120HV10C), and the same stabilized voltage $U_S$ measured in comparing example 3-2.

1. measure the standard stabilized voltage: constant-current charge the battery with 47mA (0.2C) current to 4.35V, then current-voltage charge the battery with 4.35V voltage until the current decreases to 4.7mA (0.02C), stop charging; measure the voltage of the open circuit and obtain the standard stabilized voltage $U_{SO}$, the curve of stabilized voltage $U_{SO}$ is shown in Fig.3; when stopping constant-current and constant-voltage charging the lithium-ion battery and starting to lay up the lithium-ion battery, start timing; select every 5 minutes as a time interval; from some time interval, the open-circuit voltage-drop of the lithium-ion battery would be smaller than 2mV during 5 minutes time interval, which means the battery voltage has already been in a stable state, then select the voltage corresponding to the first time point of said 5 minutes as standard stabilized voltage $U_{SO}$ of the battery;

2. constant-current discharge the battery with 47mA current (0.2C) to 3.0V; (this step discharge the capacity charged by step 1,making the battery in a awaiting charged state so it is not a necessary step for the charging method)

3. it is expected to charge the battery to saturation within 30 minutes; According to the lithium-ion battery charging method for correcting and compensating voltage disclosed by the present invention, the current used for constant-current charging would be 470mA (2C charging rate); when the battery is charged to $U=3U_0-U_S-U_{SO}$, start to constant-voltage charge the battery until the charging current decreases to 95% of the charging current before constant-voltage charging; record the charging time $T_C$ and charge capacity $C_C$.

4. constant-current discharge the battery with 47mA current (0.2C) to 3.0V, and then record the discharge capacity $C_d$; (this step may evaluate the discharge capacity after charging, so it is not a necessary step for the charging method)

5. cycling procedures:

5.1 constant-current charge the lithium-ion battery with 470mA to $3U_0-U_S-U_{SO}$, then start charging by constant-voltage charging and won't stop charging until the charging current decreases to 446.5mA (95% of the current before constant-voltage charging) ;

5.2 lay up the battery for 5 minutes;

5.3 constant-current discharge the battery with 470 mA current to 3.0V;

5.4 lay up the battery for 5 minutes;

5.5 keep cycling between the step 5.1 to step 5.4 for 500 times;

5.6 end.

The experimental results of comparing example 3-1, comparing example 3-2 and embodiment 3 are listed in table 3:

Table 3

| | Comparing example 5-1 | Comparing example 5-2 | Embodiment 6 |
|---|---|---|---|
| Uo(V) | 4.35 | 4.35 | 4.35 |
| Us(V) | - | 4.216 | 4.216 |
| Uso(V) | - | - | 4.333 |
| Charging current(mA) | 47 | 470 | 470 |
| Charge cut-off current(mA) | 4.7 | 470 | 446.5 |
| Limited charge voltage(V) | 4.2 | 4.484 | 4.501 |
| Charging time Tc(min) | 341 | 30.8 | 31.6 |
| Charge Capacity Cc(mAh) | 245 | 239 | 247 |
| Discharge Capacity Cd(mAh) | 244 | 238 | 246 |
| Saturation level of charging | 100% | 97.5% | 100.8% |
| Capacity retention ratio after cycling for 500 times | 75.4% | 78.2% | 77.8% |

In the practical implementation, alternatively, (1).measure $U_S$ and $U_{SO}$ of every battery before every charging, and then charge the battery by the charging method of the present invention (or the charging method disclosed by CN101388477B), obviously it is cumbersome charging the battery in this way; (2).measure $U_S$ and $U_{SO}$ of every battery before charging, and each time charge the battery by the charging method of the present invention (or the charging method disclosed by CN101388477B), obviously it is cumbersome likewise; (3).measure $U_S$ and $U_{SO}$ of battery of every model before charging, and each time charge every battery of said battery model by the charging method of the present invention (or the charging method disclosed by CN101388477B), which is much more convenient. Although there may be slight difference between different battery of the same battery model, or between every charging of the same battery, which doesn't affect the implementation of the patent. The present invention may charge the battery close to saturation by charging method, while it may not guarantee charging the battery to 100% saturation.

In the practical implementation, it is not necessary to charge the battery only when the battery is completely discharged; it is allowed to charge the battery by the charging method disclosed by the present invention even the battery is in fully-discharged state, half-charged state, over half-charged state, while it is not necessary to charge the battery when it is fully charged.

**Claims**

1. A lithium-ion battery charging method for correcting and compensating voltage, **characterized in** comprising: during the charging process, starting to constant-voltage charge the battery when it is charged to the voltage limited charge voltage U; keeping on constant-voltage charging until the charging current decreases to 5%-99.99% of the charging current before constant-voltage charging; and then stopping charging the battery, the limited charge voltage between the battery positive and negative electrodes is set as $3U_0\text{-}U_S\text{-}U_{SO}$;

   $U_{SO}$ is the standard stabilized voltage dropped from $U_0$ which the battery is charged to by constant-current and constant-voltage charging;
   $U_S$ is the stabilized voltage dropped from $U_0$ which the battery is charged to by constant-current charging;
   $U_0$ is stabilized charge cut-off voltage.

2. The lithium-ion battery charging method for correcting and compensating voltage according to claim 1, **characterized in** comprising: during the charging process, starting to constant-voltage charge the battery when it is charged to the voltage limited charge voltage U; keeping on constant-voltage charging until the charging current decreases to 50%-99.99% of the charging current before constant-voltage charging; and then stopping charging the battery, the limited charge voltage between the battery positive and negative electrodes is set as $3U_0\text{-}U_S\text{-}U_{SO}$;

   $U_{SO}$ is the standard stabilized voltage dropped from $U_0$ which the battery is charged to by constant-current and constant-voltage charging;
   $U_S$ is the stabilized voltage dropped from $U_0$ which the battery is charged to by constant-current charging;
   $U_0$ is stabilized charge cut-off voltage.

3. The lithium-ion battery charging method for correcting and compensating voltage according to claim 1 or 2, **characterized in that** the value of $U_S$ is selected by the following steps: start timing when stopping constant-current and constant-voltage charging and starting to layup the lithium-ion battery, from some time interval $T_{Us}$, the open-circuit voltage-drop of the lithium-ion battery would be smaller than some certain value during some certain time interval $T_{Us}$ and the battery voltage has already been in a stable state, then select the voltage corresponding to the first time point of the time interval $T_{Us}$ as stabilized voltage $U_S$ of the battery.

4. The lithium-ion battery charging method for correcting and compensating voltage according to claim 1 or 2, **characterized in that** the battery is constant-current charged to limited charge voltage U of the battery.

5. The lithium-ion battery charging method for correcting and compensating voltage according to claim 1 or 2, **characterized in that** the battery is charged to limited charge voltage U of the battery by multi-stage constant-current charging method, $U_S$ is determined by measuring the current of the end-section before stopping charging.

6. The lithium-ion battery charging method for correcting and compensating voltage according to claim 1 or 2, **characterized in that** the battery is charged to limited charge voltage of the battery by non-constant-current charging method, $U_S$ is determined by measuring the current of the end-section before stopping charging.

7. The lithium-ion battery charging method for correcting and compensating voltage according to claim 1 or 2, **characterized in that** $U_{SO}$ is the standard stabilized voltage dropped from $U_0$ which the battery is charged to by constant-current and constant-voltage charging, the value of $U_{SO}$ is selected by the following steps: when stopping constant-current and constant-voltage charging the lithium-ion battery and starting to lay up the lithium-ion battery, starting timing; from some time interval $T_{Uso}$, the open-circuit voltage-drop of the lithium-ion battery would be smaller than some certain value during some certain time interval $T_{Uso}$ and the battery voltage has already been in a stable state; then selecting the voltage corresponding to the first time point of said time interval $T_{Uso}$ as standard stabilized voltage $U_{SO}$ of the battery.

8. The lithium-ion battery charging method for correcting and compensating voltage according to claim 7, **characterized in** comprising: when stopping constant-current and constant-voltage charging the lithium-ion battery and starting to lay up the lithium-ion battery, starting timing; selecting every 5 minutes as a time interval $T_5$; from some time interval $T_5$, the open-circuit voltage-drop of the lithium-ion battery would be smaller than 2 mV during 5 minutes time interval $T_5$ and the battery voltage has already been in a stable state; then selecting the voltage corresponding to the first time point of said 5 minutes interval $T_5$ as standard stabilized voltage $U_{SO}$ of the battery.

9. The lithium-ion battery charging method for correcting and compensating voltage according to claim 7, **characterized in** comprising: when stopping constant-current and constant-voltage charging the lithium-ion battery and starting to lay up the lithium-ion battery, starting timing; selecting every 10 minutes as a time interval; from some time interval $T_{10}$, the open-circuit voltage-drop of the lithium-ion battery would be smaller than 1 mV during 10 minutes time interval $T_{10}$ and the battery voltage has already been in a stable state; then selecting the voltage corresponding to the first time point of said 10 minutes interval $T_{10}$ as standard stabilized voltage $U_{SO}$ of the battery.

10. The lithium-ion battery charging method for correcting and compensating voltage according to claim 7, **characterized in that** the value of $U_S$ is selected by the following steps: start timing when stopping constant-current and constant-voltage charging and starting to layup the lithium-ion battery, from some time interval $T_{Us'}$, the open-circuit voltage-drop of the lithium-ion battery would be smaller than some certain value during some certain time interval $T_{Us'}$ and the battery voltage has already been in a stable state, then select the voltage corresponding to the first time point of the time interval $T_{Us'}$ as stabilized voltage $U_S$ of the battery

11. The lithium-ion battery charging method for correcting and compensating voltage according to claim 1 or 2, **characterized in that**,

   when the battery is lithium iron phosphate battery, the standard charge cut-off voltage $U_0$ is 3.5V, 3.6V, 3.65V or 3.7V;
   when the battery is lithium cobalt battery, the standard charge cut-off voltage $U_0$ is 4.2 V, 4.3V, 4.35V, 4.4V or 4.5V;
   when the battery is ternary lithium battery, the standard charge cut-off voltage $U_0$ is 4.2V, 4.3Vor 4.35V.

12. The lithium-ion battery charging method for correcting and compensating voltage according to claim 1 or 2, **characterized in that** the battery is lithium cobalt battery and $U_0$ is selected as 4.2V, $U_0 \approx U_{SO}$, stop charging when it is charged to $U = U_0 + (U_0 - U_S)$.


**Patentansprüche**

1. - Ladeverfahren einer Lithium-Ionen-Batterie zur Korrektur und Kompensation von Spannung, **dadurch gekennzeichnet, dass** es Folgendes umfasst: während des Ladeprozesses Starten des Konstantspannungsladens der Batterie, wenn sie bis zur spannungsbegrenzten Ladespannung U geladen wird; Beibehalten des Konstantspannungsladens, bis der Ladestrom auf 5 % - 99,99 % des Ladestroms vor dem Konstantspannungladen abfällt; und dann Stoppen des Ladens der Batterie, wobei die begrenzte Ladespannung zwischen den positiven und negativen Elektroden der Batterie ist als $3U_0 - U_s - U_{SO}$ eingestellt;

   $U_{SO}$ ist die standardmäßig stabilisierte Spannung, abgefallen von $U_0$, auf die die Batterie durch Konstantstrom- und Konstantspannungsladen geladen wird;
   $U_S$ ist die stabilisierte Spannung, abgefallen von $U_0$, auf die die Batterie durch Konstantstromladen geladen wird;
   $U_0$ ist die stabilisierte Ladeschlussspannung.

2. - Ladeverfahren einer Lithium-Ionen-Batterie zur Korrektur und Kompensation von Spannung nach Anspruch 1, **dadurch gekennzeichnet, dass** es Folgendes umfasst: während des Ladeprozesses Starten des Konstantspannungsladens der Batterie, wenn sie bis zur spannungsbegrenzten Ladespannung U geladen wird; Beibehalten des Konstantspannungsladens, bis der Ladestrom auf 50 % - 99,99 % des Ladestroms vor dem Konstantspannungladen abfällt; und dann Stoppen des Ladens der Batterie, wobei die begrenzte Ladespannung zwischen den positiven und negativen Elektroden der Batterie ist als $3U_0$-$U_s$-$U_{SO}$ eingestellt;

$U_{SO}$ ist die standardmäßig stabilisierte Spannung, abgefallen von $U_0$, auf die die Batterie durch Konstantstrom- und Konstantspannungsladen geladen wird;
$U_S$ ist die stabilisierte Spannung, abgefallen von $U_0$, auf die die Batterie durch Konstantstromladen geladen wird;
$U_0$ ist die stabilisierte Ladeschlussspannung.

3. - Ladeverfahren einer Lithium-Ionen-Batterie zur Korrektur und Kompensation von Spannung nach Anspruch 1 oder **2, dadurch gekennzeichnet, dass** der Wert von $U_S$ ausgewählt ist durch die folgenden Schritte: Starten des Timings beim Stoppen des Konstantstrom- und Konstantspannungsladens und Starten der Außerbetriebsetzung der Lithium-Ionen-Batterie, wenn von einem Zeitintervall $T_{US}$ der Leerlaufspannungsabfall der Lithium-Ionen-Batterie kleiner als ein bestimmter Wert während eines bestimmten Zeitintervalls $T_{US}$ ist und die Batteriespannung bereits in einem stabilen Zustand ist, dann Auswählen der Spannung, die dem ersten Zeitpunkt des Zeitintervalls $T_{US}$ entspricht, als stabilisierte Spannung $U_S$ der Batterie.

4. - Ladeverfahren einer Lithium-Ionen-Batterie zur Korrektur und Kompensation von Spannung nach Anspruch 1 oder **2, dadurch gekennzeichnet, dass** die Batterie auf eine begrenzte Ladespannung U der Batterie konstantstromgeladen wird.

5. - Ladeverfahren einer Lithium-Ionen-Batterie zur Korrektur und Kompensation von Spannung nach Anspruch 1 oder **2, dadurch gekennzeichnet, dass** die Batterie auf die begrenzte Ladespannung U der Batterie durch ein mehrstufiges Konstantstromladeverfahren geladen wird, wobei $U_S$ durch Messen des Stroms des Endabschnitts vor dem Stoppen des Ladens festgelegt wird.

6. - Ladeverfahren einer Lithium-Ionen-Batterie zur Korrektur und Kompensation von Spannung nach Anspruch 1 oder **2, dadurch gekennzeichnet, dass** die Batterie auf die begrenzte Ladespannung der Batterie durch das Nicht-Konstantstromladeverfahren geladen wird, wobei $U_S$ durch Messen des Stroms des Endabschnitts vor dem Stoppen des Ladens festgelegt wird.

7. - Ladeverfahren einer Lithium-Ionen-Batterie zur Korrektur und Kompensation von Spannung nach Anspruch 1 oder **2, dadurch gekennzeichnet, dass** $U_{S0}$ die standardmäßig stabilisierte Spannung, abgefallen von $U_0$, ist, auf die die Batterie durch Konstantstrom- und Konstantspannungsladen geladen wird, der Wert von $U_{S0}$ ausgewählt wird durch die folgenden Schritte: beim Stoppen des Konstantstrom- und Konstantspannungsladens der Lithium-Ionen-Batterie und Starten der Außerbetriebsetzung der Lithium-Ionen-Batterie, Starten des Timings; wenn von einem Zeitintervall $T_{US0}$ der Leerlaufspannungsabfall der Lithium-Ionen-Batterie kleiner als ein bestimmter Wert während eines bestimmten Zeitintervalls $T_{US0}$ ist und die Batteriespannung bereits in einem stabilen Zustand ist; dann Auswählen der Spannung, die dem ersten Zeitpunkt des Zeitintervalls $T_{US0}$ entspricht, als standardmäßige stabilisierte Spannung $U_{S0}$ der Batterie.

8. - Ladeverfahren einer Lithium-Ionen-Batterie zur Korrektur und Kompensation von Spannung nach Anspruch 7, **dadurch gekennzeichnet, dass** es Folgendes umfasst: beim Stoppen des Konstantstrom- und Konstantspannungsladens der Lithium-Ionen-Batterie und Starten der Außerbetriebsetzung der Lithium-Ionen-Batterie, Starten des Timings; Auswählen von jeweils 5 Minuten als einem Zeitintervall $T_5$; wenn von einem Zeitintervall $T_5$ der Leerlaufspannungsabfall der Lithium-Ionen-Batterie kleiner als 2 mV während dem Zeitintervall von 5 Minuten $T_5$ ist und die Batteriespannung bereits in einem stabilen Zustand ist; dann Auswählen der Spannung, die dem ersten Zeitpunkt des Intervalls von 5 Minuten $T_5$ entspricht, als standardmäßige stabilisierte Spannung $U_{S0}$ der Batterie.

9. - Ladeverfahren einer Lithium-Ionen-Batterie zur Korrektur und Kompensation von Spannung nach Anspruch 7, **dadurch gekennzeichnet, dass** es Folgendes umfasst: beim Stoppen des Konstantstrom- und Konstantspannungsladens der Lithium-Ionen-Batterie und Starten der Außerbetriebsetzung der Lithium-Ionen-Batterie, Starten des Timings; Auswählen von jeweils 10 Minuten als einem Zeitintervall; wenn von einem Zeitintervall $T_{10}$ der Leerlaufspannungsabfall der Lithium-Ionen-Batterie kleiner als 1 mV während des Zeitintervalls von 10 Minuten $T_{10}$ ist und die Batteriespannung bereits in einem stabilen Zustand ist; dann Auswählen der Spannung, die dem ersten Zeitpunkt des Intervalls von 10 Minuten $T_{10}$ entspricht, als standardmäßige stabilisierte Spannung $U_{S0}$ der Batterie.

**10.** - Ladeverfahren einer Lithium-Ionen-Batterie zur Korrektur und Kompensation von Spannung nach Anspruch 7, **dadurch gekennzeichnet, dass** der Wert von $U_S$ ausgewählt ist durch die folgenden Schritte: Starten des Timings, beim Stoppen des Konstantstrom- und Konstantspannungsladens und Starten der Außerbetriebsetzung der Lithium-Ionen-Batterie, wenn von einem Zeitintervall $T_{US'}$ der Leerlaufspannungsabfall der Lithium-Ionen-Batterie kleiner als ein bestimmter Wert während eines bestimmten Zeitintervalls $T_{US'}$ ist und die Batteriespannung bereits in einem stabilen Zustand ist, dann Auswählen der Spannung, die dem ersten Zeitpunkt des Zeitintervalls $T_{US'}$ entspricht, als stabilisierte Spannung $U_S$ der Batterie.

**11.** - Ladeverfahren einer Lithium-Ionen-Batterie zur Korrektur und Kompensation von Spannung nach Anspruch 1 oder **2, dadurch gekennzeichnet, dass**

wenn die Batterie eine Lithium-Eisenphosphat-Batterie ist, die standardmäßige Ladeschlussspannung $U_0$ 3,5V, 3,6V, 3,65V oder 3,7V ist;
wenn die Batterie eine Lithium-Kobalt-Batterie ist, die standardmäßige Ladeschlussspannung $U_0$ 4,2 V, 4,3V, 4,35V, 4,4V oder 4,5V ist;
wenn die Batterie eine ternäre Lithium-Batterie ist, die standardmäßige Ladeschlussspannung $U_0$ 4,2V, 4,3V oder 4,35V ist.

**12.** - Ladeverfahren einer Lithium-Ionen-Batterie zur Korrektur und Kompensation von Spannung nach Anspruch 1 oder 2, **dadurch gekennzeichnet, dass** die Batterie eine Lithium-Kobalt-Batterie ist und $U_0$ ausgewählt ist als 4,2V, $U_0 \approx U_{S0}$, Stoppen des Ladens, wenn sie auf $U \approx U_0 + (U_0 - U_S)$ geladen wird.

**Revendications**

**1.** - Procédé de charge de batterie au lithium-ion pour corriger et compenser une tension, **caractérisé par le fait qu'**il comprend : pendant le processus de charge, commencer une charge à tension constante de la batterie lorsqu'elle est chargée à la tension de charge limitée en tension U ; maintenir la charge à tension constante jusqu'à ce que le courant de charge diminue à 5%-99,99% du courant de charge avant la charge à tension constante ; puis arrêter la charge de la batterie, la tension de charge limitée entre les électrodes positive et négative de la batterie étant définie comme étant $3U_0 - U_S - U_{SO}$ ;

$U_{SO}$ étant la tension stabilisée standard diminuée à partir de $U_0$ à laquelle la batterie est chargée par une charge à courant constant et tension constante ;
$U_S$ étant la tension stabilisée diminuée à partir de $U_0$ à laquelle la batterie est chargée par une charge à courant constant ;
$U_O$ étant une tension d'arrêt de charge stabilisée.

**2.** - Procédé de charge de batterie au lithium-ion pour corriger et compenser une tension selon la revendication 1, **caractérisé par le fait qu'**il comprend : pendant le processus de charge, commencer une charge à tension constante de la batterie lorsqu'elle est chargée à la tension de charge limitée en tension U ; maintenir la charge à tension constante jusqu'à ce que le courant de charge diminue à 50%-99,99% du courant de charge avant la charge à tension constante ; puis arrêter la charge de la batterie, la tension de charge limitée entre les électrodes positive et négative de la batterie étant définie comme étant $3U_0 - U_S - U_{SO}$ ;

$U_{SO}$ étant la tension stabilisée standard diminuée à partir de $U_0$ à laquelle la batterie est chargée par une charge à courant constant et tension constante ;
$U_S$ étant la tension stabilisée diminuée à partir de $U_0$ à laquelle la batterie est chargée par une charge à courant constant ;
$U_O$ étant une tension d'arrêt de charge stabilisée.

**3.** - Procédé de charge de batterie au lithium-ion pour corriger et compenser une tension selon la revendication 1 ou **2, caractérisé par le fait que** la valeur de $U_S$ est sélectionnée par les étapes suivantes : commencer une temporisation lors d'un arrêt de la charge à courant constant et tension constante et d'un début de mise en réserve de la batterie au lithium-ion, à partir d'un certain intervalle de temps $T_{Us}$, lorsque la chute de tension en circuit ouvert de la batterie au lithium-ion est inférieure à une certaine valeur pendant un certain intervalle de temps $T_{Us}$ et la tension de batterie a déjà été dans un état stable, alors sélectionner la tension correspondant au premier point temporel de l'intervalle de temps $T_{Us}$ comme tension stabilisée $U_S$ de la batterie.

**4.** - Procédé de charge de batterie au lithium-ion pour corriger et compenser une tension selon la revendication 1 ou **2, caractérisé par le fait que** la batterie est chargée à courant constant jusqu'à la tension de charge limitée U de la batterie.

**5.** - Procédé de charge de batterie au lithium-ion pour corriger et compenser une tension selon la revendication 1 ou 2, **caractérisé par le fait que** la batterie est chargée à la tension de charge limitée U de la batterie par un procédé de charge à courant constant à multiples étapes, $U_S$ étant déterminé par mesure du courant de la section finale avant un arrêt de la charge.

**6.** - Procédé de charge de batterie au lithium-ion pour corriger et compenser une tension selon la revendication 1 ou 2, **caractérisé par le fait que** la batterie est chargée à la tension de charge limitée de la batterie par un procédé de charge à courant non-constant, $U_S$ étant déterminé par mesure du courant de la section finale avant un arrêt de la charge.

**7.** - Procédé de charge de batterie au lithium-ion pour corriger et compenser une tension selon la revendication 1 ou 2, **caractérisé par le fait que** $U_{SO}$ est la tension stabilisée standard diminuée à partir de $U_0$ à laquelle la batterie est chargée par une charge à courant constant et tension constante, la valeur de $U_{SO}$ est sélectionnée par les étapes suivantes : lors d'un arrêt de la charge à courant constant et tension constante de la batterie au lithium-ion et d'un début d'une mise en réserve de la batterie au lithium-ion, commencer une temporisation ; à partir d'un certain intervalle de temps $T_{Uso}$, lorsque la chute de tension en circuit ouvert de la batterie au lithium-ion est inférieure à une certaine valeur pendant un certain intervalle de temps $T_{Uso}$ et la tension de batterie a déjà été dans un état stable ; alors sélectionner la tension correspondant au premier point temporel dudit intervalle de temps $T_{Uso}$ comme tension stabilisée standard $U_{SO}$ de la batterie.

**8.** - Procédé de charge de batterie au lithium-ion pour corriger et compenser une tension selon la revendication 7, **caractérisé par le fait qu'**il comprend : lors d'un arrêt de la charge à courant constant et tension constante de la batterie au lithium-ion et d'un début de mise en réserve de la batterie au lithium-ion, commencer une temporisation ; sélectionner toutes les 5 minutes comme intervalle de temps $T_5$ ; à partir d'un certain intervalle de temps $T_5$, lorsque la chute de tension en circuit ouvert de la batterie au lithium-ion est inférieure à 2 mV pendant l'intervalle de temps de 5 minutes $T_5$ et la tension de batterie a déjà été dans un état stable ; alors sélectionner la tension correspondant au premier point temporel dudit intervalle de temps de 5 minutes $T_5$ comme tension stabilisée standard $U_{SO}$ de la batterie.

**9.** - Procédé de charge de batterie au lithium-ion pour corriger et compenser une tension selon la revendication 7, **caractérisé par le fait qu'**il comprend : lors d'un arrêt de la charge à courant constant et tension constante de la batterie au lithium-ion et d'un début de mise en réserve de la batterie au lithium-ion, commencer une temporisation ; sélectionner toutes les 10 minutes comme intervalle de temps ; à partir d'un certain intervalle de temps $T_{10}$, lorsque la chute de tension en circuit ouvert de la batterie au lithium-ion est inférieure à 1 mV pendant l'intervalle de temps de 10 minutes $T_{10}$ et la tension de batterie a déjà été dans un état stable ; alors sélectionner la tension correspondant au premier point temporel dudit intervalle de temps de 10 minutes $T_{10}$ comme tension stabilisée standard $U_{SO}$ de la batterie.

**10.** - Procédé de charge de batterie au lithium-ion pour corriger et compenser une tension selon la revendication 7, **caractérisé par le fait que** la valeur de $U_S$ est sélectionnée par les étapes suivantes : commencer une temporisation lors d'un arrêt de la charge à courant constant et tension constante et d'un début de mise en réserve de la batterie au lithium-ion, à partir d'un certain intervalle de temps $T_{Us'}$, lorsque la chute de tension en circuit ouvert de la batterie au lithium-ion est inférieure à une certaine valeur pendant un certain intervalle de temps $T_{Us'}$ et la tension de batterie a déjà été dans un état stable, alors sélectionner la tension correspondant au premier point temporel de l'intervalle de temps $T_{Us'}$ comme tension stabilisée $U_S$ de la batterie.

**11.** - Procédé de charge de batterie au lithium-ion pour corriger et compenser une tension selon la revendication 1 ou 2, **caractérisé par le fait que**,

lorsque la batterie est une batterie au lithium-fer-phosphate, la tension d'arrêt de charge standard $U_0$ est de 3,5V, 3,6V, 3,65V ou 3,7V ;
lorsque la batterie est une batterie au lithium-cobalt, la tension d'arrêt de charge standard $U_0$ est de 4,2V, 4,3V, 4,35V, 4,4V ou 4,5V ;
lorsque la batterie est une batterie au lithium ternaire, la tension d'arrêt de charge standard $U_0$ est de 4,2V, 4,3V ou 4,35V.

**12.** - Procédé de charge de batterie au lithium-ion pour corriger et compenser une tension selon la revendication 1 ou 2, **caractérisé par le fait que** la batterie est une batterie au lithium-cobalt et $U_0$ est sélectionnée comme étant 4,2V, $U_0 = U_{SO}$, et la charge est arrêtée lorsqu'elle est chargée à $U \approx U_0 + (U_0 - U_S)$.

Fig.1

Fig.2

Fig.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101388477 B

- WO 2017113994 A1
- US 2011156660 A1